(19) Europäisches Patentamt
European Patent Office
Office européen des brevets

(11) **EP 1 560 135 A1**

(12) **EUROPEAN PATENT APPLICATION**
published in accordance with Art. 158(3) EPC

(43) Date of publication:
03.08.2005 Bulletin 2005/31

(51) Int Cl.$^7$: **G06F 17/60**

(21) Application number: 03748680.0

(86) International application number:
**PCT/JP2003/012666**

(22) Date of filing: 02.10.2003

(87) International publication number:
**WO 2004/036471 (29.04.2004 Gazette 2004/18)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **18.10.2002 JP 2002304221**

(71) Applicant: **MATSUSHITA ELECTRIC INDUSTRIAL CO., LTD.**
**Kadoma-shi, Osaka 571-8501 (JP)**

(72) Inventor: **TANAKA, Shin-ichi**
**Kyotanabe-shi, Kyoto 610-0357 (JP)**

(74) Representative: **Eisenführ, Speiser & Partner**
**Patentanwälte Rechtsanwälte**
**Postfach 10 60 78**
**28060 Bremen (DE)**

(54) **ELECTRONIC MONEY PROCESSING DEVICE**

(57) A settlement method with electronic money in an electronic money system, achieving an economic effect by mentally promoting consumption of the electronic money is provided. When electronic settlement is made using electronic money, the balance of electronic money is reduced at a predetermined rate according to the difference between the predetermined reference date and the settlement date. The reduced balance is made the updated balance of the electronic money to depreciate the electronic money sequentially. From the updated balance of the depreciated electronic money, at least part of the demanded money is paid for settlement.

*Fig.4*

PROCESS FOR BALANCE CALCULATION OF ELETCRONIC MONEY

S13 — NUMBER OF DEPRECIATION DATES PASSING AFTER THE LAST DEPRECIATION DATE→N

S14 — DEPRECIATION VALUE=BALANCE OF DEPRECIATED MONEY×{1−(1−DEPRECIATION RATE)$^N$}

S15 — BALANCE OF DEPRECIATED MONEY=BALANCE OF DEPRECIATED MONEY−DEPRECIATION VALUE

S16 — CONFIRM TRANSFER VALUE WITH ELECTRONIC MONEY

S17 — IS DEPRECIATED ELECTRONIC MONEY TRANSFERRED? — NO

YES

S18 — NUMBER OF DEPRECIATION DATES PASSING AFTER THE TRANSFERRED DATE→M

S19 — DEPRECIATION PROCESS OF TRANSFERRED VALUE (P) OF DEPRECIATED MONEY P=(1−DEPRECIATION RATE)$^M$

S20 — BALANCE OF DEPRECIATED MONEY=BALANCE OF DEPRECIATED MONEY+TRANSFERRED VALUE OF DEPRECIATED MONEY

S21 — IS NORMAL ELECTRONIC MONEY TRANSFERRED? — NO

YES

S22 — BALANCE OF NORMAL MONEY=BALANCE OF NORMAL MONEY+TRANSFERRED VALUE OF NORMAL MONEY

S23 — UPDATE THE LAST DEPRECIATION DATE

END

EP 1 560 135 A1

**Description**

Technical Field

The present invention relates to an electronic settlement method in an electronic money system using electronic money in a broad sense including a savings account for payment which stores an exchangeable value in the electronic form and can be used in an electronic commerce settlement.

Background Art

Recently, electronic money of which value as money is stored in an IC memory card and the like in the electronic data form has been proposed and gradually spread. Various kinds of techniques of an electronic money system have been devised (refer to Patent document 1, for example).

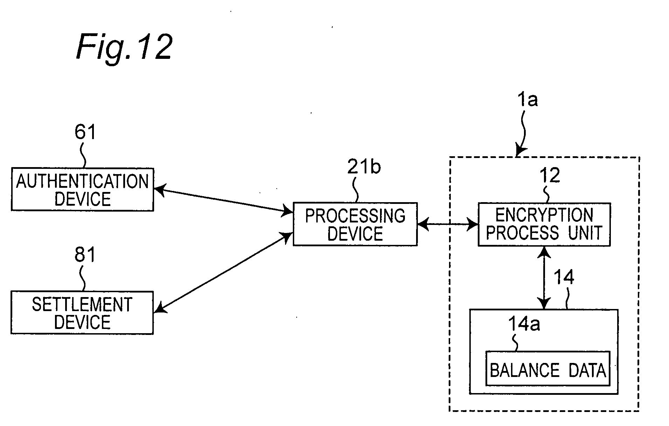

Fig. 12 shows a system configuration including a memory card storing conventional electronic money and a processing device thereof. An IC card 1a includes an encryption process unit 12 which encrypts, and inputs or outputs authentication data of a user or data of a balance of electronic money and the like, and a memory 14 which stores a value of the electronic money as balance data 14a. The data in the IC card 1a is read by a processing device 21b set in a general retail store and the like and updated as required.

A process when a user makes a payment using the electronic money is as follows.

The processing device 21b of the electronic money reads authentication information when the IC card 1a is inserted, and certifies a user and electronic money information of the IC card 1a. This certification is performed by an authentication device 61 in an authentication organization through a network 50. When they are certified, the processing device 21b transfers a value corresponding to an amount of payment in the value stored in the IC card 1a to the processing device 21b. At this time, the balance data (value) of the IC card 1a is updated (reduced).

Then, a settlement device 81 in a settlement organization such as a credit company and the like receives settlement information from the processing device 21b, and settles the payment by the electronic money cooperating with a processing device in a financial organization.

In addition, a settlement method using points or a service card with an expiration date other than the electronic money is disclosed in Patent documents 2 and 3, which can be used for payment for a product in a limited range similar to the electronic money. Furthermore, Patent document 4 discloses a settlement method using a card in which money data is electronically recorded.

Patent document 1: JP,10-124604,A
Patent document 2: JP,10-78989,A
Patent document 3: JP,8-16668,A
Patent document 4: JP,3-191497,A

According to the conventional electronic money system, the value of the electronic money recorded in the IC card and the like is not changed with time. That is, when a value of 10,000 yen is recorded in the IC card, the value is maintained at 10,000 yen even after a few years passed as long as there is no payment from the card or money supply.

Under the circumstances in which the economics are depressed, a consumer tends to be interested in saving the money instead of spending it. Thus, the general consumer having electronic money would prefer to save rather than to spend such electronic money similarly to the normal currency.

In addition, according to the conventional electronic money system, since the electronic money can be used for a total amount of payment and there is no limit of a minimum usable amount. Therefore, even when the tax is returned in the form of the conventional electronic money, increased consumer spending is expected just for a value corresponding to a tax rebate at the most The problem could not be solved in which the tax does not lead to an increased consumption because it is absorbed in daily consumption.

Although the electronic money is used in electronic transaction, it has the same monetary value as the money (currency) circulating in the normal market physically. Thus, when opportunities to purchase products or services with the electronic money are increased, it is expected that the market is activated and the business recovers. That is, it is expected that the demands is increased and the economics are improved by increasing the chance to circulate the electronic money in the market. In this respect, it is necessary to make the general consumer want to consume the electronic money. In addition, when the money is returned as tax rebate and it leads to consumption of many times the tax cut, the market can be further activated.

# EP 1 560 135 A1

Discloser of the Invention

The present invention was made in view of the above problems and it is an object of the present invention to provide a settlement method of electronic money by which a consumption stimulating effect can be expected by promoting consumption of the electronic money psychologically and leading consumption more than a value of the certain electronic money.

A first settlement method according to the present invention is an electronic settlement method used in an electronic money system which electronically settles a payment using electronic money which is information regarding a monetary value recorded in a predetermined recording medium. The method includes recording a balance of first electronic money in the recording medium, at a timing of settlement, depreciating the first electronic money with time, by reducing the balance of the first electronic money at a predetermined rate based on a difference between a predetermined reference date and a settlement date and using the reduced balance as a new balance of the first electronic money, and paying an amount equal to at least a part of an amount of claim at the timing of settlement, from the reduced balance of the first electronic money.

A second settlement method according to the present invention is an electronic settlement method which electronically settles a payment using electronic money which is information regarding a monetary value recorded in a predetermined recording medium. According to the method, a balance of first electronic money and a balance of second electronic money is recorded in the recording medium. The first electronic money should be used in combination with the second electronic money at a timing of settlement. An upper limit of a proportion of the first electronic money to a total amount to be paid is provided.

A third settlement method according to the present invention is an electronic settlement method used in an electronic money system which electronically settles a payment using electronic money which is information regarding a monetary value recorded in a predetermined recording medium. The method includes recording a balance of first electronic money in the recording medium, and at the time of settlement, allowing the first electronic money to be used for the settlement when an amount of payment is more than a predetermined amount, or prohibiting the first electronic money from being used when the amount of payment is less more than the predetermined amount.

A first recording medium according to the present invention is a recording medium carrying electronic money which stores a balance of electronic money which is information regarding a monetary value and capable of being settled electronically. The recording medium stores information of a balance of depreciated electronic money which is depreciated with time, and a depreciation rate which is used for depreciating the depreciated electronic money, the depreciation rate being a rate between balances of the depreciated electronic money before and after depreciating the depreciated electronic money.

A second recording medium according to the present invention is a recording medium carrying electronic money which stores a balance of the electronic money which is information regarding a monetary value and capable of being settled electronically. The recording medium stores information of a balance of first electronic money, information of a balance of second electronic money, and information indicative of an upper limit of a proportion of the first electronic money to a total amount to be paid at a timing of settlement using the first and second electronic money.

A first processing device of electronic money according to the present invention reads information recorded in the above recording medium carrying electronic money, and reduces the balance of the depreciated electronic money recorded in the recording medium at the depreciation rate based on a difference between a predetermined reference date and a settlement date.

A second processing device of electronic money according to the present invention reads the information recorded in the second recording medium, depreciates balances of first electronic money and second electronic money recorded in the recording medium so that its total becomes an amount of payment, based on information showing an upper limit of a proportion of the first electronic money to a total amount to be paid, and increases electronic money of a recipient of the payment by the amount of payment.

A third processing device of electronic money reads information recorded in the recording medium according to the present information at a timing of settlement, and then allows the first electronic money to be used when an amount of payment is more than a predetermined amount, or prohibits the first electronic money from being used for the settlement when the amount of payment is less than the predetermined amount.

According to the present invention, the electronic payment can be settled using the electronic money of which value is depreciated with time. When the electronic money which is depreciated with time is supplied to general consumers, it is expected that the consumers aggressively spend the electronic money instead of saving it, thus to induce the personal consumption and increases the demand.

**3**

Brief Description of Drawings

Fig. 1 is a view showing a configuration of an electronic money system according to a first embodiment of the present invention.

Fig. 2 is a view to explain an example flow of electronic money in the electronic money system according to the first embodiment.

Fig. 3 is a flowchart showing a settlement process using depreciated electronic money according to the first embodiment.

Fig. 4 is a flowchart showing a balance calculation process of the electronic money in the settlement process.

Fig. 5 is a flowchart showing a payment process in the settlement process.

Fig 6 is a view showing a configuration of an electronic money system according to a second embodiment of the present invention.

Fig. 7 is a view to explain an account for depreciated electronic money in a bank.

Fig. 8 is a flowchart showing a return process of a reduced amount of the depreciated electronic money.

Fig. 9 is a view to explain an example flow of electronic money in the electronic money system according to the second embodiment.

Fig. 10 is a flowchart showing a settlement process according to the second embodiment.

Fig. 11 is a view to explain a flow of depreciated electronic money according to a third embodiment.

Fig. 12 is a view showing a configuration of a conventional electronic money system.

Best Mode for Carrying out the Invention

Embodiments of a settlement method with electronic money according to the present invention will be described in detail with reference to the accompanying drawings hereinafter.

First Embodiment

1. System Configuration

Electronic money used in an electronic money system according to the present invention is depreciated in its monetary value with elapsed days from a predetermined reference date. When the electronic money which is depreciated with time is supplied to consumers, it is considered that a psychological process occurs such that the consumer wants to use the electronic money while the value of the money remains as much as possible, that is, in a timing as early as possible. Therefore, such electronic money is not saved and a consumption rate is improved. That is, the consumer is driven to buy a product and the like and the electronic money is increasingly circulated in a market, so that a demand is increased. Thus, it is expected that the economics is activated.

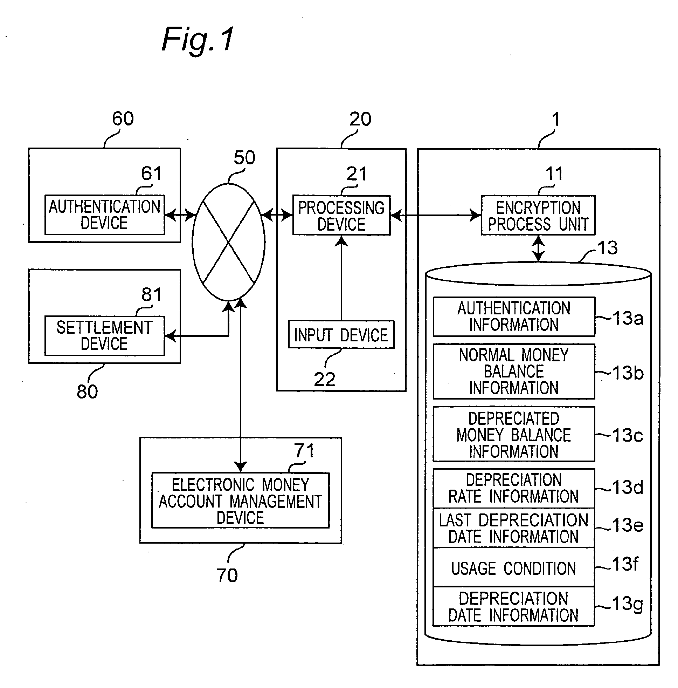

A configuration of the electronic money system according to the present invention will be described with reference to Fig. 1. It is noted that, in the following description, electronic money which is depreciated in its value with time is referred to as the "depreciated electronic money", and conventional electronic money which is not changed in its value with time is referred to as the "normal electronic money".

Referring to Fig. 1, an IC card 1 is a recording medium in which values of the depreciated electronic money and the normal electronic money are recorded, and includes an encryption process unit 11 and a memory 13.

The encryption process unit 11 encrypts authentication information of a user who uses the IC card and data of the value of the electronic money, and inputs or outputs them.

The memory 13 of the IC card 1 stores the following information 13a to 13f.

Authentication Information (13a): authentication information of the user who can use the IC card 1.

Normal Money Balance Information (13b): information showing a balance of the normal electronic money stored in the IC card 1.

Depreciated money Balance Information (13c): information showing a balance of the depreciated electronic money stored in the IC card 1.

Depreciation Rate Information (13d): information showing a reduction rate when a value of the depreciated electronic money is reduced with time.

Last Depreciation Date Information (13e): information of a date on which a depreciation calculation is performed for the depreciated electronic money for the last time.

Usage Condition (13f): information showing a usage condition of the depreciated electronic money (the detail will be described below).

Depreciation Date Information (13g) : information showing a date when a depreciation process is performed.

The IC card 1 storing the electronic money is processed in a processing device 21 disposed in a general retail store 20. That is, the processing device 21 reads/writes data from/to the IC card 1. The processing device 21 is connected to an input device 22 through which information of code number of the user or an amount of payment and the like is input.

The processing device 21 is connected to an authentication device 61 in an authentication organization 60, an electronic money account management device 71 in a bank 70, and a settlement device 81 in a settlement organization 80 through a network 50. The electronic money account management device 71 is a device for managing a personal account for the electronic money in the bank 70. The network 50 may be the Internet, for example.

Functions of the processing device 21, the authentication device 61, the electronic money account management device 70 and the settlement device 81 may be implemented by a computer reading and executing a predetermined program (the same is true in the following embodiments). Such a program may be provided by an information recording medium such as a CD-ROM, a DVD-ROM and the like which can be read by the computer.

Next, a usage aspect of the electronic money in this embodiment will be described.

The normal money balance information 13b and the depreciated money balance information 13c are stored in the memory 13, and two kinds of the electronic money. That is, two types of electronic money including the depreciated electronic money which is depreciated in value with time and the normal electronic money which is not changed in value with time can be used in the IC card 1.

The following rules are provided as a usage condition of the depreciated electronic money.

[Rule A]: Payment cannot be made by only the depreciated electronic money, that is, the depreciated electronic money has to be used together with the normal electronic money for payment. At this time, an upper limit is provided to a proportion of the depreciated electronic money to a total payment (referred to as the "maximum usable rate"). For example, when the maximum usable rate is set to. 10%, the depreciated electronic money is only used up to 10% in a total payment for a product. In this case, the normal electronic money is used to pay the balance.

[Rule B]: Provided is a lower limit value of an amount which the depreciated electronic money can be used for one payment (referred to as the "minimum usable amount"). For example, when the minimum usable amount is set to 1,000 yen, the depreciated electronic money cannot be used unless the amount paid with the depreciated electronic money is not less than 1,000 yen.

The information of the maximum usable rate and the minimum usable amount is stored in the memory 13 in the IC card 1 as the usage condition 13f. According to the rule A, the payment with only the depreciated electronic money is prohibited. That is, since a larger amount of another type of money (the normal electronic money, for example) has to be spent together with the depreciated electronic money, an amount of consumption is further increased and an economic effect can be expected. In addition, according to the rule B, when the consumer spends the depreciated electronic money, the user has to purchase a product which has a price not less than a predetermined amount. Accordingly, an effective demand is increased and the economic effect can be expected. It is noted that, although the payment cannot be made by only the depreciated electronic money under the rule A in this embodiment to increase the effective demand, payment by only the depreciated electronic money may be admitted.

In addition, although the rule A and the rule B are combined in this embodiment and the following embodiments, either one of the rules may be applied. For example, when only the rule B is applied, the depreciated electronic money cannot be used for payment when the total payment is less than a certain amount. In this case, in order to consume the depreciated electronic money, the consumer has to purchase a product or service which costs a certain amount of money or more. As a result, since the depreciated electronic money is not likely to spent for purchasing a daily low-cost product or service, individual consumption is increased and the economic effect can be expected.

Furthermore, in the rule B, instead of the minimum usable amount of the depreciated electronic money, there may be provided a lower limit value of the total payment (referred to as the "minimum payment amount") which can be paid by the electronic money. That is, for one payment, the electronic money is allowed to be used for the payment of which total amount is not less than the minimum payment amount, while the electronic money is prohibited from being used for the payment of which total amount is less than the minimum payment amount. For example, if the minimum payment amount is set to 10,000 yen, for one payment, when the total amount of payment is less than 10,000 yen, a part or a whole of the payment cannot be made by the electronic money. In this case, a limitation by the minimum payment amount may be applied to the payment only by the depreciated electronic money, or may be applied to the payment by the combination of the depreciated electronic money and the normal electronic money. For example, it may be so constituted that the depreciated electronic money can be spent only when the total amount of payment is not less than the minimum payment amount, while the depreciated electronic money cannot be used when the total amount of payment is less than the minimum payment amount. Alternatively, when the total amount of payment is not less than the minimum payment amount, the payment by the combination of the depreciated electronic money and the normal electronic money may be allowed.

2. Flow of Electronic Money

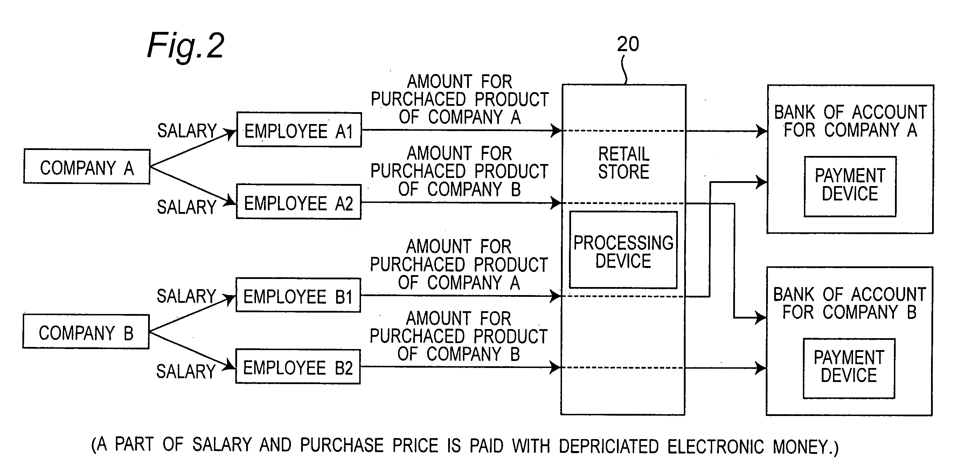

Fig. 2 is a view to explain a flow of the electronic money in the electronic money system according to the present invention. The electronic money is paid from a company A employing employees A1 and A2, to each of the employees A1 and A2 as a salary.

When the employee A1 or A2 purchases a product with the electronic money, a value of the electronic money for the purchase price is reduced from the IC card of the employee A1 or A2, and the product is transferred to a retail store 20 which sold the product. Then, settlement information of the electronic money is transmitted from the retail store 20 to a bank of account for company A, and the payment is settled in the bank for company A. Similarly, salaries paid for employees B1 and B2 from a company B have the same flow.

In the case shown in Fig. 2, for example, a part of the salary may be paid with the depreciated electronic money and the company A may make an contract with the company B so that the electronic money can be spent for a part of the purchase price only when a product which is manufactured by the company A or B is purchased. Thus, the sales of both companies A and B are expected to be increased. Depreciating the value of the electronic money is for accelerating the consumption. The employees of both companies A and B are likely to purchase the products of both companies. As a result, sales of both companies can be expected to be increased.

3. Process of Electronic Money System

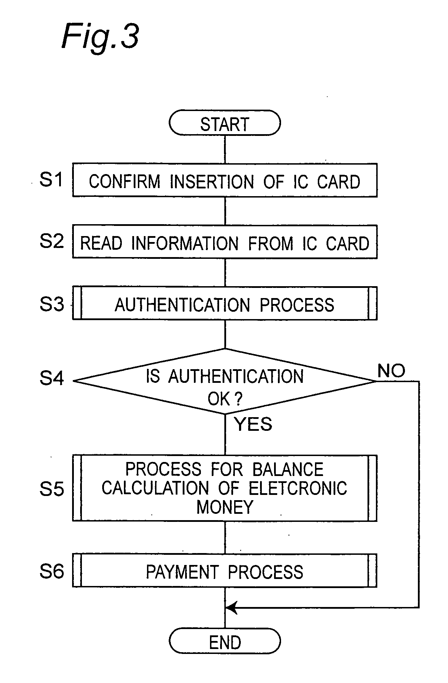

Regarding the electronic money system having the above described configuration, a description will be made to a process of the processing device 21 with reference to flowcharts shown in Figs. 3 to 5.

Fig. 3 is the flowchart showing a process of the processing device 21 when a payment process is performed using the IC card 1 in which a value of the electronic money is recorded.

When the IC card 1 is inserted to the processing device 21 by an operator, the processing device 21 confirms the insertion (S1), and reads the information 13a to 13f stored in the memory 13 in the IC card 1 (S2). Then, it performs an authentication process (S3). When the IC card is authenticated, a balance calculation of the value of the electronic money is performed (S5), and then payment process is performed (S6).

In the authentication process at step S3 in Fig. 3, the authentication information 13a of the IC card and information such as a password input by a user are transmitted to the authentication organization 60 and the IC card and the user are verified. The authentication organization 60 returns the authentication result to the processing device 21.

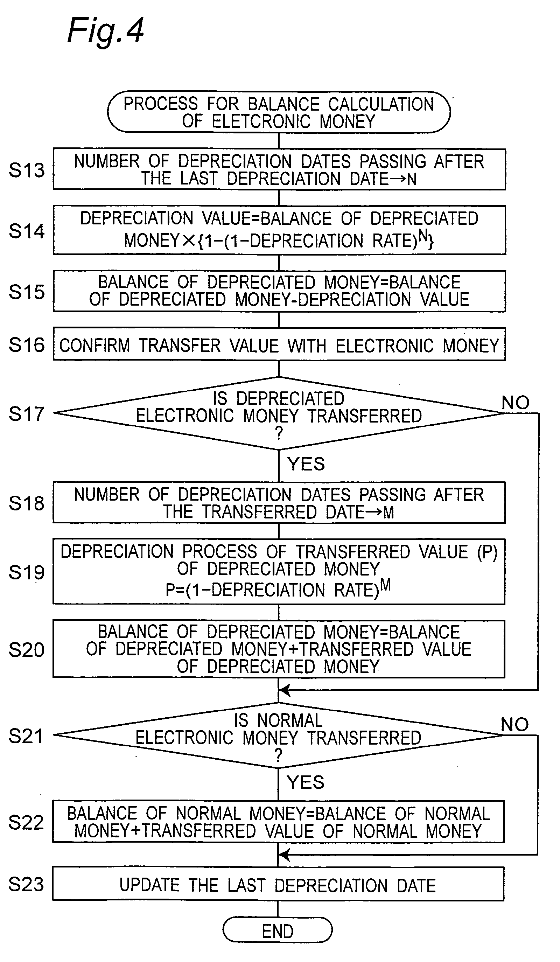

The balance calculation process of the value of the electronic money at step S5 in Fig. 3 will be described with reference to the flowchart shown in Fig. 4.

First, the last depreciation date which is a date when the depreciated electronic money is depreciated for the last time is acquired from the last depreciation date information 13e. Then it is determined how many "depreciation dates" pass from the last depreciation date (S13) (number of determined depreciation dates is set at N). It is noted that the "depreciation date" is a day set in advance as a day on which the depreciation process should be carried out, for example, it is set at a payday.

Then, depreciation calculation of the depreciated electronic money is performed based on the number (N) of the passed depreciation dates and the depreciation rate determined by the depreciation rate information 13e (S14 and S15). More specifically, regarding the depreciated electronic money of which balance is recorded in the IC card 1 at present, an amount depreciated in value with time (referred to as "depreciation value") is calculated based on number of days passing between the last depreciation date and the present time and the depreciation rate determined by the depreciation rate information 13d (S14). The calculated depreciation value is subtracted from the depreciated money balance determined by the depreciated money balance information 13c (S15). When the number (N) of depreciation dates is 0, it is determined that the depreciated electronic money is not to be depreciated yet, skipping the steps S14 and S15.

It is confirmed whether the electronic money is transferred (S16). For confirmation of the transferring, the processing device 21 communicates with the electronic money account management device 71 of the bank 70 over the network 50 to acquire the transfer information. Thus, transferred amounts P and Q of the depreciated electronic money and the normal electronic money are confirmed, respectively.

As a result of the confirmation of transfer information, when depreciated electronic money is already transferred (Yes at S17), the depreciation process is performed on the transferred depreciated electronic money. That is, the number of depreciation dates passing after the transferred date is obtained (S18) (the number is set at M), and the transferred depreciated electronic money is depreciated based on the number of the dates and the depreciation rate (S19). The depreciated transferred amount is added to the depreciated electronic money balance (S20). In the case there is no transfer (No at step S17), the above steps S18 to S20 are skipped.

Then, it is confirmed whether there is a transfer of the normal electronic money (S21). When the normal electronic money is transferred, the transferred normal electronic money amount is added to the normal electronic money balance (S22).

Finally, the last depreciation date information 13e is updated (S23) when the depreciation process of the depreciated electronic money is performed at the steps S14, S15, S19 and S20.

As described above, the values of the depreciated electronic money and the normal electronic money are updated in the IC card 1, and subsequently a payment process is performed (S6).

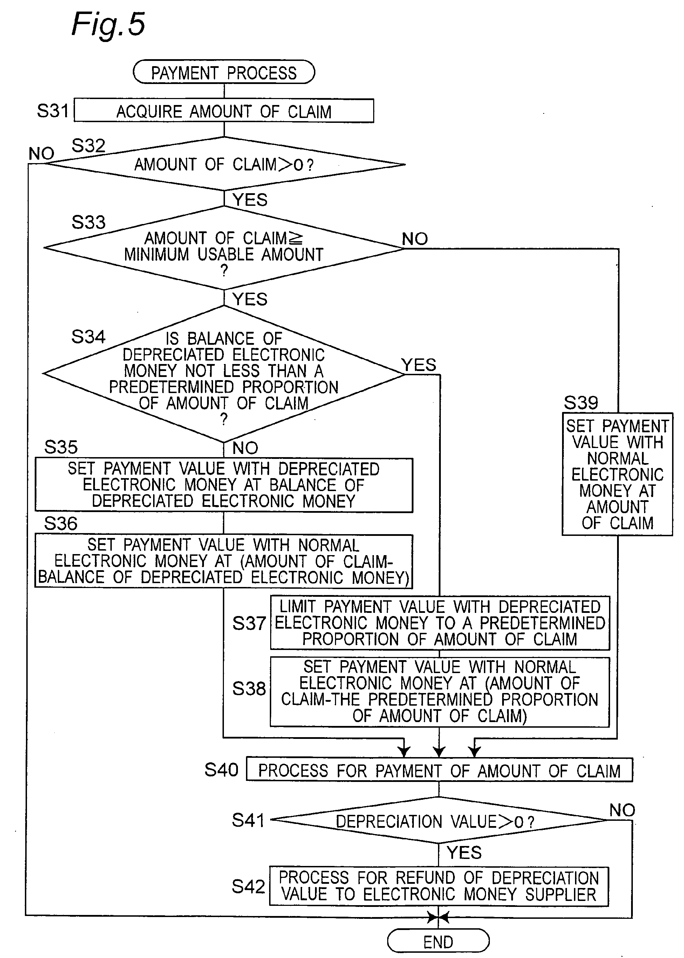

The payment process at step S6 in Fig 3 will be described with reference to the flowchart shown in Fig. 5.

First, the processing device 21 acquires information of an amount of claim which is entered through the input device 22 (S31). When there is no payment to be claimed, tat is, the amount of claim is not positive (No at step S32), this process is completed without performing the following processes. Meanwhile, there is an amount to be paid, that is, the amount of claim is positive (Yes at S32), the following steps (S33 to S42) are performed to carry out the payment process.

First, it is determined whether the amount of claim is not less than the minimum usable amount (S33).

When the amount of claim C is less than the minimum usable amount (No at step S33), use of the depreciated electronic money is prohibited from being used for this payment according to the rule B, and thus the normal electronic money should be used for the total amount. That is, the amount of payment by the depreciated electronic money is determined to be zero while the amount of payment with the normal electronic money is determined to be equal to the amount of claim (S39). In this case, an amount equal to the whole amount of claim is subtracted from the normal money balance.

When the amount of claim C is not less than the minimum usable amount (Yes at step S33), the depreciated electronic money is allowed to be used for this payment. However, there is a limitation about a usage rate of the depreciated electronic money under the rule A. Therefore, it is determined whether the depreciated money balance is not less than a predetermined proportion of the amount of claim (S34). It is noted that "a predetermined proportion' means "the maximum usable rate" in the rule A. This determination can be made by judging whether the following relation is satisfied.

$$\text{depreciated money balance} > \text{amount of claim} \times \text{maximum usable rate}$$

When the depreciated money balance is less than the predetermined proportion of the amount of claim (No at S34), the whole depreciated money balance can be used for the payment, because even if all of the depreciated money balance is used, it can not reach the upper limit due to the maximum usable rate. More specifically, the amount of payment by the depreciated electronic money is set at the same amount as its balance (S35), and the amount of the payment by the normal electronic money is set at a value provided by subtracting the payment by the depreciated electronic money from the amount of claim (S36). In this case, the whole depreciated electronic money balance is reduced and an amount of (amount of claim - depreciated money balance) is reduced from the normal money balance.

When the depreciated money balance is not less than the predetermined proportion of the amount of claim (Yes at S34), the amount of payment is determined so that the depreciated electronic money can be used as much as possible. That is, the amount of payment by the depreciated electronic money is set at the predetermined proportion of the payment of claim (= the payment of claim X the maximum using ratio) (S37), and the amount of payment by the normal electronic money is set at an amount provided by subtracting the payment by the depreciated electronic money from the amount of claim (S38). That is, in this case, the predetermined amount of the payment of claim (= the payment of claim ' the maximum using ratio) is reduced from the depreciated money balance, and an amount of (amount of claim - predetermined amount of the amount of claim) is reduced from the normal money balance.

As described above, for the settlement using the electronic money, the amount of payment by the depreciated electronic money and the normal electronic money is determined so as to comply with the rules A and B.

After determination of the amount of payment by the depreciated electronic money and the normal electronic money, the processing device 21 performs a process to pay the amount of claim (S40). More specifically, the depreciated money balance information 13c and the normal money balance information 13b in the memory 13 in the IC card 1 are updated based on the amount of payment by the electronic money determined at the steps S35 to 39. At the same time, balance information of the depreciated electronic money and the normal electronic money stored in the processing device 21 in the retail store is updated. That is, in the update process, the amount of payment of the respective moneys are added to the balance information of the depreciated electronic money and the normal electronic money stored in the processing device 21 in the retail store.

In this process, when the depreciated electronic money is depreciated with time (that is, when the depreciation value is positive) (Yes at S41), a process to return the depreciation value to its electronic money supplier is done (S42). More specifically, depreciation value information of the depreciated electronic money with respect to the supplier of the depreciated electronic money, which is stored in the processing device 21 in the retail store, is updated. The information regarding the supplier of the depreciated electronic money may be acquired from the authentication organization based on the authentication information of the user, for example.

The reason why the depreciated amount is returned to the supplier is as follows. When the company issues the depreciated electronic money, the company has a responsibility to convert the used depreciated electronic money to ordinary money, and it is regarded as a debt on the company side. When the electronic money is depreciated linearly at a constant ratio, even if the depreciated amount is not fed back, the total debt amount can be perceived by depreciating the total amount of the issued electronic money at a constant ratio. However, when the depreciation rate is non-linear, for example, when it is set such that the electronic money is not reduced after it is reduced at 50% once, the total of the depreciated amount cannot be calculated from the total of the issued electronic money simply. In such a case, in order to correctly grasp the effective value of the total electronic money which becomes a debt amount, it is necessary to feed back the depreciated amount of each electronic money to accumulate it. Consequently, the reason why the depreciated amount is fed back is because the total amount in the financial market can be grasped even in the case of the non-linear depreciation.

In addition, an expiration date may be provided for the depreciated electronic money as a usage condition of the depreciated electronic money. Information regarding the expiration date may be contained in the usage condition 13f, for example. In calculation of the balance of the depreciated electronic money, the value of depreciated electronic money which has passed the expiration date is regarded as zero.

As described above, according to this embodiment, electronic payment can be settled using the electronic money which is depreciated with time. It is considered that when the electronic money depreciated with time is supplied to the general consumer, the consumer does not save it but use it positively, so that personal consumption is promoted and demands can be increased.

Second Embodiment

Another embodiment of the electronic money system according to the present invention will be described. According to this embodiment, a payment process using depreciated electronic money is performed by a transfer process in a bank account without using an IC card.

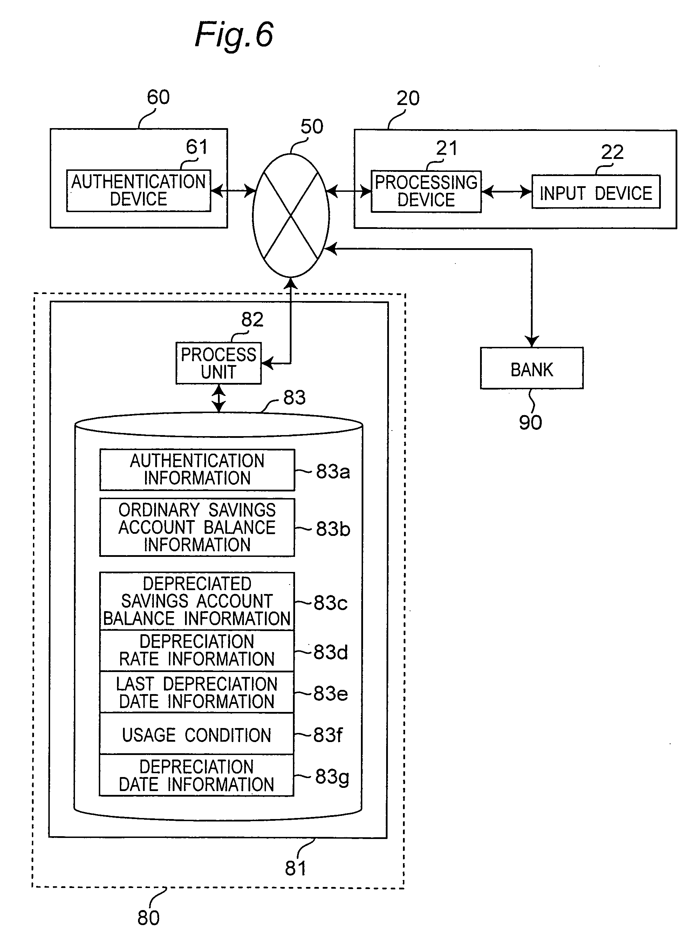

Fig. 6 shows a configuration of the electronic money system according to this embodiment. A settlement device 81 according to this embodiment includes a process unit 82 and a memory unit 83. The memory unit 83 stores the following information 83a to 83g.

Authentication Information (83a): authentication information of a user

Ordinary Savings Account Balance Information (83b): information showing a balance of an ordinary savings account in a bank.

Depreciated Savings Account Balance Information (83c): information showing a balance of a depreciated savings account in the bank.

Depreciation Rate Information (83d): information showing a rate of the depreciation value when the depreciated electronic money is reduced with time.

Last Depreciation Date Information (83e): information of a date on which a depreciation calculation is performed for the depreciated electronic money for the last time.

Usage condition (83f): information showing a usage condition of the depreciated electronic money.

Depreciation Date Information (83g): information showing a date when a depreciation process is performed.

The process unit 82 reads the information 83a to 83g from the memory unit 83 and updates the information 83a to 83g in the memory unit 83.

A process of the depreciated electronic money according to this embodiment will be schematically described. According to this embodiment, it is also assumed that there are constraints of rules A and B in using the depreciated electronic money similar to the first embodiment. In addition, it is assumed that the money is transferred to a savings account of an employee A1 from a company A.

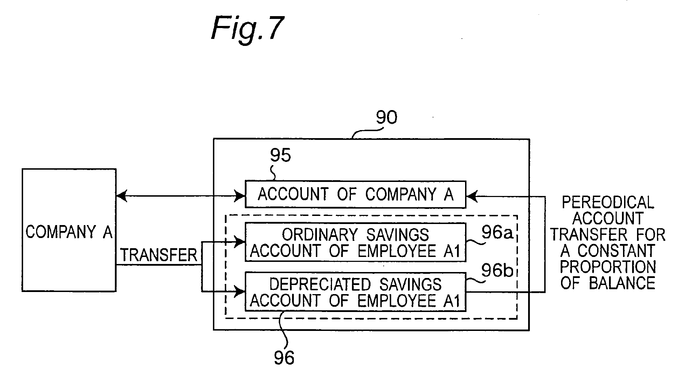

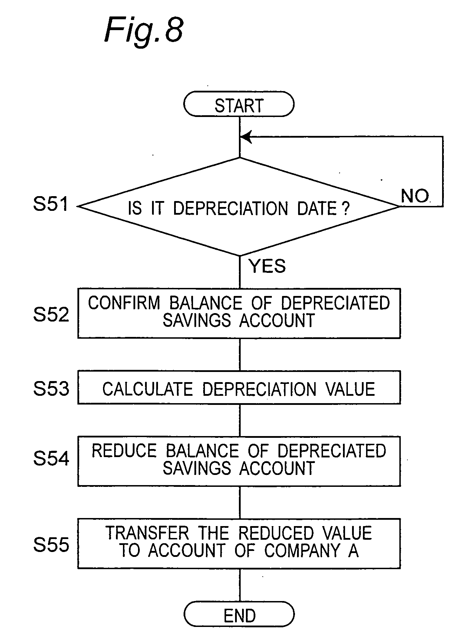

As shown in Fig. 7, as a bank account, a bank 90 includes an account 95 of the company A, an ordinary savings account 96a of the employee A1, and a savings account provided for depreciated electronic money (referred to as "depreciated savings account") 96b. The bank 90 depreciates with time the balance of the depreciated electronic money in the depreciated savings account, and returns the depreciated amount to the company A which originally supplied the depreciated electronic money. More specifically, as shown in Fig. 8, the bank 90 confirms, every predetermined depreciation date (S51), the saving balance of the depreciated savings account 96b of the employee A1 (S52), and multiplies the saving balance with a depreciation rate to calculate a depreciation value (S53). Then, the bank 90 draws the calculated depreciation value from the balance of the depreciated savings account 96b (S54), and transfers the depreciation value from the depreciated savings account 96b to the account 95 of the company A(S55).

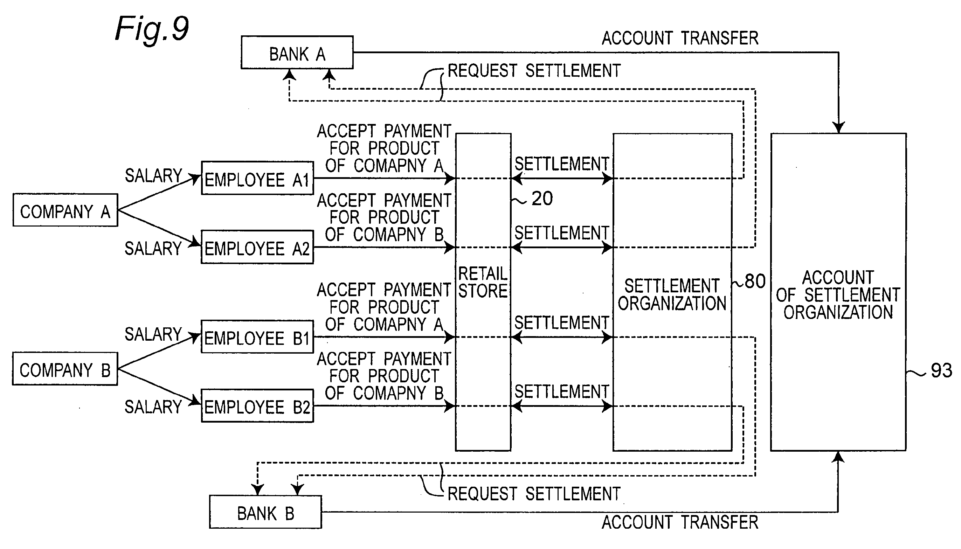

Referring to Fig. 9, the money is paid from the company A to the savings accounts 96a and 96b of the employee A1. The employee A1 purchases a product at the retail store 20 and accept paying a part of amount of claim for the product with the depreciated electronic money. The retail store 20 claims the payment of the employee A1 to the settlement organization 80. The settlement organization 80 confirms the balance of the depreciated savings account 96b of the employee A1 in a bank A in response to the claim. Then, the settlement organization 80 asks for the settlement of the payment to the bank A so that a predetermined proportion of the amount of claim is withdrawn from the depreciated savings account 96b of the employee A1 and the remaining amount of claim is withdrawn from the ordinary savings account 96a to transfer them to a bank account of the retail store 20. In this case, when the balance of the depreciated savings account 96b is less than the predetermined proportion of the amount, the shortage is withdrawn from the ordinary savings account 96a of the employee A1.

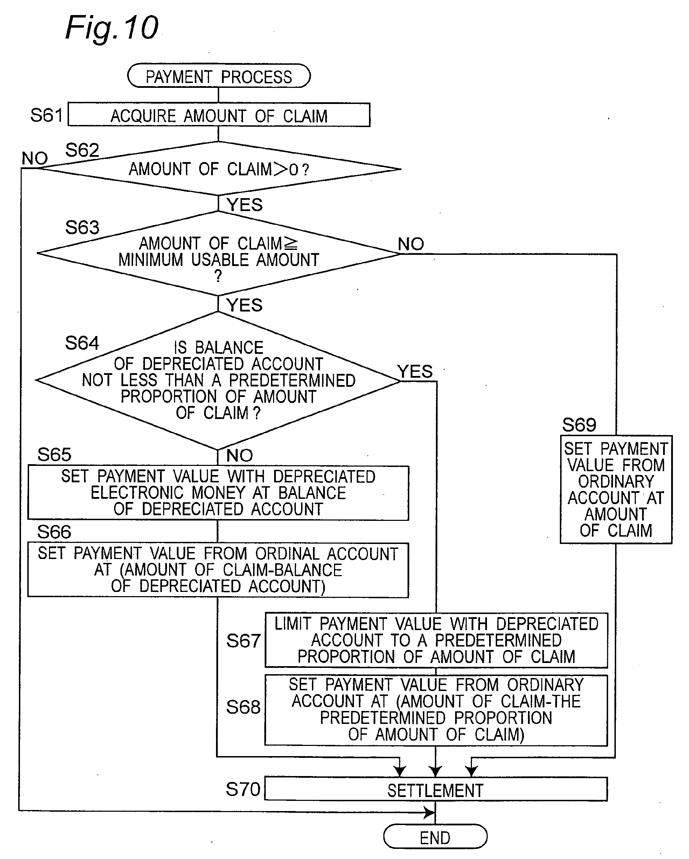

The above described process will be explained with reference to a flowchart shown in Fig. 10.

The settlement device 81 acquires information of the amount of claim from the retail store 20 (S61). If there is no payment to be made (No at S62), this process is completed without performing the following steps. When there is a payment to be made (Yes at S62), the following steps (S63 to S70) are carried out to perform the settlement process.

First, it is determined whether the amount of claim is not less than a minimum usable amount (S63). When the amount of claim is less than the minimum usable amount (No at S63), the depreciated electronic money cannot be used for this payment under the rule B, and thus the payment is made from the ordinal savings account. That is, the amount of payment from the depreciated savings account is determined to be zero and the amount of payment from the ordinary savings account is determined to be equal to the amount of claim (S69). In this case, all of the amount of claim is reduced from the ordinal savings account.

When the amount of claim is not less than the minimum usable amount (Yes at step S63), the depreciated electronic money can be used for this payment. In consideration of the rule A, it is determined whether the depreciated savings account balance is not less than a predetermined proportion (maximum usable rate) of the amount of claim (S64).

When the depreciated savings account balance is less than the predetermined proportion of the amount of claim (No at S64), the amount of payment from the depreciated electronic money is set to be equal to the total amount of the depreciated savings account balance (S65), and the amount of payment from the ordinary account is set to be (amount of claim - depreciated savings account balance) (S66). In this cease, the total of the depreciated savings account balance is reduced, and the amount of (amount of claim - depreciated savings account balance) is reduced from the ordinal savings account balance.

When the depreciated electronic money balance is not less than the predetermined proportion of the amount of claim (Yes at S64), the amount of payment from the depreciated savings account is set to be equal to the predetermined proportion of the amount of claim (= the amount of claim X the maximum usable rate) (S67), and the amount of payment from the ordinal savings account is set to be an amount provided by subtracting the amount of payment by the depreciated electronic money from the amount of claim (S68). At this time, the predetermined amount in the amount claimed (= the amount of claim X the maximum usable rate) is reduced from the depreciated savings account balance.

After determination of amounts of payment from the depreciated savings account and the ordinary savings account, settlement is claimed to the bank 90 (S70). More specifically, a request for transferring the amount of payment from the depreciated savings account and the ordinary savings account determined at the steps S65 to 69 to the account of the retail store 20 is made to the bank 90. In addition, the ordinary savings account balance information 83b and the depreciated savings account balance information 83c stored in the memory unit 83 in the settlement device 81 are updated.

As described above, according to this embodiment, the payment of the product can be settled using the depreciated electronic money without using the IC card carrying the electronic money.

Third Embodiment

A description will be made of another example of a usage aspect of the electronic money which is depreciated with time as described above. More particularly, a case where a predetermined amount of money is paid to an individual as a tax rebate from the government with the depreciated electronic money will be described.

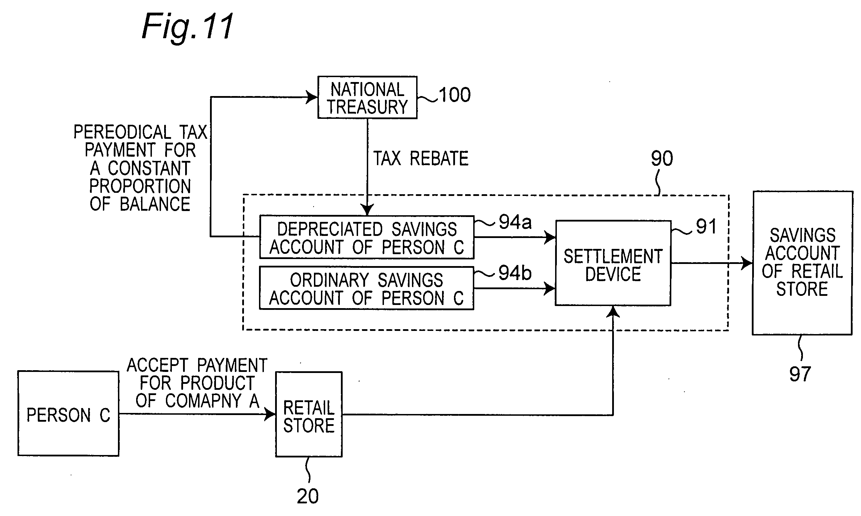

Referring to Fig. 11, a predetermined amount of money is transferred to a depreciated savings account 94a of a person C as a tax rebate from the national treasury 100. When the person C purchases a product at a retail store 20, the retail store 20 claims the amount of payment to the bank 90. The bank 90 transfers an amount corresponding to the amount of claim from the depreciated savings account 94a and an ordinary savings account 94b of the personal C to a savings account 97 of the retail store. It is noted that the process of a settlement device 91 of the bank 90 is the same process as that in the second eznbodiment with reference to the flowchart shown in Fig. 10.

An amount depreciated with time in the depreciated savings account 94a is periodically paid again as a tax to the national treasury 100. For example, the balance of the depreciated savings account 94a of the person C is confirmed on a predetermined date (the first day, for example) every month, and an amount corresponding to the depreciation rate of the balance is paid as a tax again to the national treasury 100. At this time, the amount paid as the tax again is reduced from the balance of the depreciated savings account 94a of the person C. This process is the same as that shown in Fig. 8. The reason why the tax is paid again is for the following reason.

When the government issues the electronic money as the tax rebate, a currency flow in the market is increased by the electronic money, and it is necessary to grasp the total amount of the effective electronic money to grasp the total amount of the electronic money in flow. When the electronic money is linearly depreciated, it is easy to grasp it. However, when it is depreciated non-linearly, it is necessary to feed back the depreciated amount of the individual electronic money to grasp its total amount. Thus, the reason why the tax is paid again is because the total amount of the electronic money in the market can be grasped even when the electronic money is depreciated non-linearly.

The reason why the depreciated electronic money is issued as the tax rebate is that reduction in tax can be surely connected to an increase in effective demand. That is, the electronic money is depreciated so that the tax rebate is likely not to be saved but to be consumed. To depreciate is equivalent to a minus interest. Accordingly, it is expected that the tax rebate can be consumed surely.

In addition, it is expected that the consumption which is several times the tax reduction amount can be induced, by providing a limitation (rule A) in which the depreciated electronic money can be only used within the predetermined ratio of the amount of payment. For example, when it is set that the depreciated electronic money should be used within 20% of the amount of payment, it is expected that one trillion in tax cut provides an effect corresponding to 5 trillion in tax cut.

In addition, by providing the lower limit of the amount of payment by the depreciated electronic money (rule B), the depreciated electronic money is prevented from being used for a low-cost product and the like so as to increase the effective demand. That is, personal consumption of an expensive product is induced so that the effective demand may be increased.

**Claims**

1. An electronic settlement method used in an electronic money system which electronically settles a payment using electronic money which is information regarding a monetary value recorded in a predetermined recording medium, the method comprising:

   recording a balance of first electronic money in the recording medium;
   at a timing of settlement, depreciating the first electronic money with time, by reducing the balance of the first electronic money at a predetermined rate based on a difference between a predetermined reference date and a settlement date and using the reduced balance as a new balance of the first electronic money; and
   paying an amount equal to at least a part of an amount of claim at the timing of settlement, from the reduced balance of the first electronic money.

2. The electronic settlement method according to claim 1, further comprising recording a balance of second electronic money which is not depreciated with time in the recording medium, wherein the first electronic money is used in combination with the second electronic money at the time of the settlement.

3. The electronic settlement method according to claim 2, wherein an upper limit of a proportion of the first electronic money to a total amount to be paid.

4. The electronic settlement method according to any one of claims 1 to 3, wherein a lower limit of an amount to be paid by the first electronic money is provided.

5. An electronic settlement method which electronically settles a payment using electronic money which is information regarding a monetary value recorded in a predetermined recording medium, the method comprising:

   recording a balance of first electronic money and a balance of second electronic money in the recording medium; and
   using the first electronic money in combination with the second electronic money at a timing of settlement,

   wherein an upper limit of a proportion of the first electronic money to a total amount to be paid is provided.

6. The electronic settlement method according to claims 5, wherein a lower limit of an amount to be paid by the first electronic money is provided.

7. The electronic settlement method according to claim 5, wherein an expiration date of the first electronic money is provided.

8. A recording medium carrying electronic money which stores a balance of electronic money which is information regarding a monetary value and capable of being settled electronically, the recording medium comprising:

information of a balance of depreciated electronic money which is depreciated with time; and
a depreciation rate which is used for depreciating the depreciated electronic money, the depreciation rate being a ratio between balances of the depreciated electronic money before and after depreciating the depreciated electronic money.

9. The recording medium according to claim 8 further comprising:

information of a balance of normal electronic money which is not changed in value with time; and
an upper limit of a proportion of the depreciated electronic money to a total amount to be paid at the time of settlement.

10. The recording medium according to claim 8, further comprising information of a lower limit of an amount to be paid by the depreciated electronic money.

11. The recording medium according to claim 8, further comprising information of a depreciation date which shows a timing on which the depreciated electronic money is depreciated.

12. A recording medium carrying electronic money which stores a balance of the electronic money which is information regarding a monetary value and capable of being settled electronically, the recording medium comprising:

information of a balance of first electronic money;
information of a balance of second electronic money; and
information indicative of an upper limit of a proportion of the first electronic money to a total amount to be paid at a timing of settlement using the first and second electronic money.

13. The recording medium according to claim 12, further comprising information showing an expiration date of the first electronic money.

14. The recording medium according to claim 12, further comprising a lower limit of an amount to be paid by the first electronic money.

15. A processing device of electronic money which reads the information recorded in the recording medium according to any one of claims 8 to 11, and depreciates a balance of depreciated electronic money recorded in the recording medium at the depreciation rate based on elapsed days from a predetermined reference date.

16. A processing device of electronic money which reads the information recorded in the recording medium according to any one of claims 12 to 14, depreciates balances of first electronic money and second electronic money recorded in the recording medium so that its total becomes an amount of payment, based on information showing an upper limit of a proportion of the first electronic money to a total amount to be paid, and increases electronic money of a recipient of the payment by the amount of payment.

17. An electronic settlement method used in an electronic money system which electronically settles a payment using electronic money which is information regarding a monetary value recorded in a predetermined recording medium, the method comprising:

recording a balance of first electronic money in the recording medium; and
at the time of settlement, allowing the first electronic money to be used for the settlement when an amount of payment is more than a predetermined amount, or prohibiting the first electronic money from being used when the amount of payment is less more than the predetermined amount.

18. The electronic settlement method according to claim 17 further comprising:

recording a balance of second electronic money in the recording medium or another recording medium; and

settling a payment using the first electronic money and the second electronic money when an amount of payment is more than the predetermined amount, at a timing of settlement.

19. The electronic settlement method according to claim 17, wherein the first electronic money is depreciated with time.

20. The electronic settlement method according to claim 19, further comprising
    calculating a balance of the first electronic money after being depreciated based on a difference between a predetermined date and a settlement date and depreciation information showing a degree of depreciation of the first electronic money, the depreciation information recorded in the recording medium, and
    substantially replacing the balance of the first electronic money with the calculated balance of the depreciated first electronic money.

21. The electronic settlement method according to claim 17, wherein an expiration date is set in the first electronic money.

22. A processing device of electronic money which reads information recorded in the recording medium according to any one of claims 8 to 11 at a timing of settlement, and allows the first electronic money to be used when an amount of payment is more than a predetermined amount, or prohibits the first electronic money from being used for the settlement when the amount of payment is less than the predetermined amount.

## Fig.1

AUTHENTICATION DEVICE — 61

60

50

SETTLEMENT DEVICE — 81

80

ELECTRONIC MONEY ACCOUNT MANAGEMENT DEVICE — 71

70

PROCESSING DEVICE — 21

20

INPUT DEVICE — 22

ENCRYPTION PROCESS UNIT — 11

1

AUTHENTICATION INFORMATION — 13a

NORMAL MONEY BALANCE INFORMATION — 13b

DEPRECIATED MONEY BALANCE INFORMATION — 13c

DEPRECIATION RATE INFORMATION — 13d

LAST DEPRECIATION DATE INFORMATION — 13e

USAGE CONDITION — 13f

DEPRECIATION DATE INFORMATION — 13g

13

# Fig.2

(A PART OF SALARY AND PURCHASE PRICE IS PAID WITH DEPRICIATED ELECTRONIC MONEY.)

EP 1 560 135 A1

# Fig.3

START

S1 CONFIRM INSERTION OF IC CARD

S2 READ INFORMATION FROM IC CARD

S3 AUTHENTICATION PROCESS

S4 IS AUTHENTICATION OK ? — NO

YES

S5 PROCESS FOR BALANCE CALCULATION OF ELETCRONIC MONEY

S6 PAYMENT PROCESS

END

## *Fig.4*

PROCESS FOR BALANCE CALCULATION
OF ELETCRONIC MONEY

S13 — NUMBER OF DEPRECIATION DATES PASSING AFTER
THE LAST DEPRECIATION DATE→N

S14 — DEPRECIATION VALUE=BALANCE OF DEPRECIATED
MONEY×{1−(1−DEPRECIATION RATE)$^N$}

S15 — BALANCE OF DEPRECIATED MONEY=BALANCE
OF DEPRECIATED MONEY-DEPRECIATION VALUE

S16 — CONFIRM TRANSFER VALUE WITH ELECTRONIC MONEY

S17 — IS DEPRECIATED
ELECTRONIC MONEY TRANSFERRED
? — NO

YES

S18 — NUMBER OF DEPRECIATION DATES PASSING AFTER
THE TRANSFERRED DATE→M

S19 — DEPRECIATION PROCESS OF TRANSFERRED VALUE (P)
OF DEPRECIATED MONEY
P=(1−DEPRECIATION RATE)$^M$

S20 — BALANCE OF DEPRECIATED MONEY=BALANCE
OF DEPRECIATED MONEY+TRANSFERRED VALUE
OF DEPRECIATED MONEY

S21 — IS NORMAL
ELECTRONIC MONEY TRANSFERRED
? — NO

YES

S22 — BALANCE OF NORMAL MONEY=BALANCE OF NORMAL
MONEY+TRANSFERRED VALUE OF NORMAL MONEY

S23 — UPDATE THE LAST DEPRECIATION DATE

END

# Fig.5

PAYMENT PROCESS

S31 — ACQUIRE AMOUNT OF CLAIM

S32 — AMOUNT OF CLAIM > 0 ?  NO / YES

S33 — AMOUNT OF CLAIM ≧ MINIMUM USABLE AMOUNT ?  NO / YES

S34 — IS BALANCE OF DEPRECIATED ELECTRONIC MONEY NOT LESS THAN A PREDETERMINED PROPORTION OF AMOUNT OF CLAIM ?  YES / NO

S35 — SET PAYMENT VALUE WITH DEPRECIATED ELECTRONIC MONEY AT BALANCE OF DEPRECIATED ELECTRONIC MONEY

S36 — SET PAYMENT VALUE WITH NORMAL ELECTRONIC MONEY AT (AMOUNT OF CLAIM-BALANCE OF DEPRECIATED ELECTRONIC MONEY)

S37 — LIMIT PAYMENT VALUE WITH DEPRECIATED ELECTRONIC MONEY TO A PREDETERMINED PROPORTION OF AMOUNT OF CLAIM

S38 — SET PAYMENT VALUE WITH NORMAL ELECTRONIC MONEY AT (AMOUNT OF CLAIM-THE PREDETERMINED PROPORTION OF AMOUNT OF CLAIM)

S39 — SET PAYMENT VALUE WITH NORMAL ELECTRONIC MONEY AT AMOUNT OF CLAIM

S40 — PROCESS FOR PAYMENT OF AMOUNT OF CLAIM

S41 — DEPRECIATION VALUE > 0 ?  NO / YES

S42 — PROCESS FOR REFUND OF DEPRECIATION VALUE TO ELECTRONIC MONEY SUPPLIER

END

## Fig.6

AUTHENTICATION DEVICE — 61

60

PROCESSING DEVICE — 21

INPUT DEVICE — 22

20

50

82 — PROCESS UNIT

83

AUTHENTICATION INFORMATION — 83a

ORDINARY SAVINGS ACCOUNT BALANCE INFORMATION — 83b

DEPRECIATED SAVINGS ACCOUNT BALANCE INFORMATION — 83c

DEPRECIATION RATE INFORMATION — 83d

LAST DEPRECIATION DATE INFORMATION — 83e

USAGE CONDITION — 83f

DEPRECIATION DATE INFORMATION — 83g

81

80

BANK

90

# Fig.7

## Fig.8

```
                    ┌─────────────┐
                    │    START    │
                    └──────┬──────┘
                           │      ◄──────────────────┐
                          ╱│╲                        │
                         ╱  ▼  ╲                      │
  S51 ◄───────────────╱           ╲      NO           │
                      ╲ IS IT DEPRECIATION DATE ? ╲───┘
                         ╲       ╱
                          ╲     ╱
                           ╲│╱
                            │ YES
            ┌───────────────┴───────────────┐
  S52       │ CONFIRM BALANCE OF DEPRECIATED │
            │       SAVINGS ACCOUNT          │
            └───────────────┬───────────────┘
            ┌───────────────┴───────────────┐
  S53       │  CALCULATE DEPRECIATION VALUE  │
            └───────────────┬───────────────┘
            ┌───────────────┴───────────────┐
  S54       │ REDUCE BALANCE OF DEPRECIATED  │
            │       SAVINGS ACCOUNT          │
            └───────────────┬───────────────┘
            ┌───────────────┴───────────────┐
  S55       │  TRANSFER THE REDUCED VALUE    │
            │   TO ACCOUNT OF COMPANY A      │
            └───────────────┬───────────────┘
                    ┌────────┴────┐
                    │     END     │
                    └─────────────┘
```

Fig.9

# Fig.10

**PAYMENT PROCESS**

S61 — ACQUIRE AMOUNT OF CLAIM

S62 — AMOUNT OF CLAIM > 0 ? — NO

YES

S63 — AMOUNT OF CLAIM ≧ MINIMUM USABLE AMOUNT ? — NO

YES

S64 — IS BALANCE OF DEPRECIATED ACCOUNT NOT LESS THAN A PREDETERMINED PROPORTION OF AMOUNT OF CLAIM ? — YES

NO

S65 — SET PAYMENT VALUE WITH DEPRECIATED ELECTRONIC MONEY AT BALANCE OF DEPRECIATED ACCOUNT

S66 — SET PAYMENT VALUE FROM ORDINAL ACCOUNT AT (AMOUNT OF CLAIM - BALANCE OF DEPRECIATED ACCOUNT)

S67 — LIMIT PAYMENT VALUE WITH DEPRECIATED ACCOUNT TO A PREDETERMINED PROPORTION OF AMOUNT OF CLAIM

S68 — SET PAYMENT VALUE FROM ORDINARY ACCOUNT AT (AMOUNT OF CLAIM - THE PREDETERMINED PROPORTION OF AMOUNT OF CLAIM)

S69 — SET PAYMENT VALUE FROM ORDINARY ACCOUNT AT AMOUNT OF CLAIM

S70 — SETTLEMENT

**END**

Fig.11

*Fig.12*

1a

12 — ENCRYPTION PROCESS UNIT

14

14a — BALANCE DATA

21b — PROCESSING DEVICE

61 — AUTHENTICATION DEVICE

81 — SETTLEMENT DEVICE

## INTERNATIONAL SEARCH REPORT

| International application No. |
| --- |
| PCT/JP03/12666 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 00/10068 A2 (FUISZ, Richard C.),<br>24 February, 2000 (24.02.00),<br>Section 2 (Paragraph "ECU size is more of…")<br>& AU 55589/99 A     & CA 2340055 A<br>& EP 1125181 A2     & JP 2002-522840 A | 15,16,22 |
| Y | EP 1232776 A2 (HITACHI, LTD.),<br>21 August, 2002 (21.08.02),<br>Par. No. [0016]<br>& JP 2002-245378 A     & US 2002/0112236 A1 | 15,16,22 |
| Y | US 2001/0014870 A1 (Kabushiki Kaisha TOSHIBA),<br>16 August, 2001 (16.08.01),<br>Par. No. [0101]<br>& JP 2001-216449 A | 15,16,22 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 December, 2003 (12.12.03) | 24 December, 2003 (24.12.03) |

| Name and mailing address of the ISA/<br>  Japanese Patent Office | Authorized officer |
| --- | --- |
| Facsimile No. | Telephone No. |

Form PCT/ISA/210 (second sheet) (July 1998)

**INTERNATIONAL SEARCH REPORT**

International application No.

PCT/JP03/12666

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-250988 A (HITACHI, LTD.), 14 September, 2000 (14.09.00), Par. Nos. [0037] to [0040] (Family: none) | 15,16,22 |
| A | LIETAER, Bernard A. "Community Currencies: a New Tool for the 21st Century", [online]., 02 May, 2001 (02.05.01), (IA archival date: 29 July, 2002 (29.07.02)), Retrieved from the Internet Archive (original address): <URL:http://www.transaction. net/money/cc/>, section 8 <.../cc05.html>("The majority of the present systems…") | 15,16,22 |

Form PCT/ISA/210 (continuation of second sheet) (July 1998)

## INTERNATIONAL SEARCH REPORT

| International application No. |
|---|
| PCT/JP03/12666 |

**Box I    Observations where certain claims were found unsearchable (Continuation of item 2 of first sheet)**

This international search report has not been established in respect of certain claims under Article 17(2)(a) for the following reasons:

1. ☒ Claims Nos.: 1-14, 17-21

   because they relate to subject matter not required to be searched by this Authority, namely:
   Claims 1-7, 17-21 are directed both nominally and substantially to a method of doing business (*Regulations*, rule 39.1(iii)) (claims 15, 16, 22 do not involve a specifically technological matter and are substantially directed to a method for doing business).    (Continued to extra sheet)

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)

EP 1 560 135 A1

| INTERNATIONAL SEARCH REPORT | International application No. |
|---|---|
| | PCT/JP03/12666 |

Continuation of Box No. I-1 of continuation of first sheet(1)

Claims 8-14 relate to creation of meaning to be given to information to be recorded in the context during a business transaction, namely mere presentation of information (ibid, rule 39.1(v)).

Form PCT/ISA/210 (extra sheet) (July 1998)

28